# EUROPEAN PATENT SPECIFICATION

(11) **EP 1 260 353 B1**
(45) Date of publication and mention of the grant of the patent: **22.02.2006**
(21) Application number: 02011441.9
(22) Date of filing: 24.05.2002
(51) Int. Cl.: B31B 5/78, B65B 7/14, B65B 51/14, B31B 19/64

(54) **Device and method for sealing containers**
Verfahren zum Verschliessen eines Behälters
Procédé pour fermer des récipients

(30) Priority: 25.05.2001 IT BO20010332
(43) Date of publication of application: 27.11.2002
(73) Proprietor: T.M. di Tiziana Mazza, 40064 Ozzano Emilia (Bologna) (IT)
(72) Inventor: Barufatto, Roberto, 40068 San Lazzaro Di Savena (Bologna) (IT); Barufatto, Simone, 40068 San Lazzaro Di Savena (Bologna) (IT)
(74) Representative: Negrini, Elena

(56) References cited:
- EP-A- 0 468 940
- GB-A- 2 061 219
- US-A- 1 979 827
- US-A- 3 398 503
- US-A- 5 054 272
- US-A- 5 976 317

## Description

The present invention relates to the packaging of products, particularly of pharmaceutical and cosmetic type. Particularly the invention refers to a method and a device for closing and sealing containers, single or jointed to form sticks or strips, fit to be included in a automatic packaging machine.

The known devices for closing and sealing containers made of heat-weldable plastic material and having open bottom ends, in order to fill said containers, are generally constituted by working carousels or rotating drums, with vertical axis, having support pliers, which block and move the containers, and heating and/or moulding pliers, which close and seal said containers. The support pliers are shaped according to the dimensions and the shape of the container or the container strip, and therefore have to be completely or partially replaced when the container dimensions are changed, or when a different container for a new production batch is required.

The sealing is carried out by compressing, along a direction transversal to the longitudinal axis of the containers, the bottom of these latter between the heated surfaces of the jaws of the heating pliers. The sealed end portion so carried out is fin or winglet shaped with a section substantially flattened, whose extension in direction orthogonal to the container axis is the smallest in comparison to the remaining dimensions. Said moulding usually confers to the fin or winglet an irregular and coarse aspect which requires a following and further finishing operation. Both the moulding and the finishing can generate in every case the presence on the sealed fin or winglet of edges sharp and cutting lines.

Generally the known devices are moved with alternate motion and most of the operations on the containers are made during the stop phases of said motion. Particularly the heating of the end portion of the containers is made during one single phase or during two or three following phases, according to the machine cycle, that means according the duration of said stop phase and the time need to seal the container.

In order to reduce as much as possible the sealing time, in such a way to increase the device speed and therefore the production of the machine including said device, very high heating temperatures are used, around 200-250°C. If the device is fit for operating at low speed it is possible, increasing the sealing time, to decrease the heating temperatures. In every case the amount of heat needed for sealing cannot be gradually provided, because the small number of heating stations. Such heat amount limits the typology of dosable products in the container to those products not particularly thermolabile or susceptible to sudden thermal changes, and requires complex and expensive technical solutions in order to suitably insulate the heating pliers assembly from the remaining parts of the device.

Document US 3 398 503 discloses a device for filling and closing containers, made of heat-weldable material, having a turn table rotating at uniform speed around a vertical axis and supporting a pliers fit for holding and stopping a container. Said known device includes a rocker plate assembly that is oscillated about a vertical shaft and that carries a heat sealing device of the container.

The main drawback of the known methods and devices for closing and moulding the containers consists in manufacturing only sealed and moulded end portions having a fin or winglet shape with substantially flattened section. Said end portion does not constitute a steady support base for the container, single or in form of strip, such to allow said container to self sustain in vertical position, neither a simple abutment surface for allowing a transfer of said containers in single line, each of these latter being pushed by the preceding one, along a direction parallel to the container longitudinal axis.

Other drawback of the known methods and devices is the sealed end portion having irregular and coarse shape, such to require a following and further finishing operation.

Another drawback of the known methods and devices consists in that the manufactured sealed end portion may have sharp edges and/or cutting profiles, potentially dangerous for the integrity of protection wrappings, inside which the containers must be fit.

Further drawback of the known methods and devices consists in heating at very high temperature or for a long time the container bottom, so causing a high sudden thermal change, which limits the typology of the dosable products into the container.

Another drawback of the known devices consists in that the surfaces of the heating pliers contacting the plastic material of the containers, because the following sealed parts progressively become dirty of residual plastic parts, so reducing the efficiency of the heating pliers during heat transmission and causing the moulding of end portions sealed in imperfect and/or irregular way.

Further drawback consist in the support pliers that, being shaped according to the dimensions and the shape of the container, or the container strip, are subject to a complete or partial substitution in case of a size change over, that means they are subject to maintenance and adjustment procedures generally complex and laborious, which require skilled labour and involve machine stops.

Other drawback of the known devices consists in the horizontal position of the working carousel, which requires a considerable width dimension, in case of automatic packaging machine. Such dimension, in the particular case of packaging machine for pharmaceutical use in antiseptic or sterile atmosphere, having protections or isolators, limits the accessibility to the inner parts of the machine. In these cases, in fact, in order to not contaminate the controlled atmosphere inside the machine, the operator is obliged to keep closed the protection or the isolator and to operate inside the machine, using gloves through suitable openings carried out on the same protection.

The main object of the present invention is to propose a method and a device for closing and moulding the containers which allows to carry out an end portion sealed with fin or winglet shape, and having a bead having different shapes, according to the specific requirements.

Other object is to propose a method and a device allowing to carry out a sealed and moulded end bead, in such way to constitute a support base for the steady vertical positioning of the container, single or together with others in strip, or to carry out an abutment surface adequate to allow the transfer of the containers in single line, each one being pushed by the preceding one along a direction parallel to the container longitudinal axis.

Another object is to propose a method and a device allowing to carry out sealed bottom and end beads, having rounded shape, without sharp edges and/or cutting lines.
Further object is to propose a method and a device providing a progressive heating, according to predefined and different time and different heating temperatures having reduced value, fit to reduce the sudden thermal change on the product to be packaged, inside the container.

Another object consists in proposing a device allowing to clean or to replace the surfaces of the sealing means, which contact the plastic material of the containers, when dirty and stained by plastic residual parts, in such way to keep unchanged the efficiency in the heat transmission and so to guarantee the moulding of sealed end portions in accurate and regular way.

Further object is to propose a device having support means of the containers, single or together with others in strips, which are shaped according to the dimensions and the shape of said containers, but which allow size change over procedures quick, simple that does not require skilled labour and long machine stops.

Another object is to propose a method and a device allowing to move, to close and to seal the containers along a vertical plan, permitting to limit the machine dimensions, especially the width, of the machine, which includes said device for a better inner accessibility by the operator and for a better path of the laminar flow.

The above-mentioned objects are achieved according to the content of the claims.

The characteristics of the present invention are underlined in the following with particular reference to attached drawing tables, in which:
- figure I shows a front view of the device object of the present invention, fit in an automatic packaging machine;
- figure 2 shows a front enlarged view of the closing and sealing carousel of the figure I device, in which some parts have been removed for better underlining others;
- figure 3 shows a section view according to the plain III-III of figure 2;
- figures 4A to 4B show front enlarged views respectively of the upsetting station of the figure 1 device and of a variant of said station;
- figure 5 shows a partial section side view of a pliers assembly including inner pliers and external pliers of the device of figure 1;
- figure 6A shows a front view of the pliers assembly of figure 5;
- figure 6B shows an axonometric partial section view of the heads of the pliers assembly of figure 5, in which some parts have been removed for better underlining others;
- figures 6C and 6D show respectively a top view of the inner pliers closed and a partial axonometric view of closed pliers inner and external, in which some parts have been removed for better underlining others;
- figures 6E and 6F show respectively a top view of a variant of the inner pliers closed and a partial axonometric view of closed pliers inner and external in which some parts have been removed for better underlining others;
- figure 7 shows a plan view of the pliers assembly of figure 5;
- figure 7A shows a plan view of the pliers assembly of figure 5, in which some parts have been removed for better underlining others;
- figure 8 shows a partial section plan view of a sealing station of the device object of the present invention;
- figure 9 shows a section view according to plain IX-IX of the sealing station of figure 8;
- figure 10 shows a section view according to plain X-X of the sealing station of figure 8;
- figure 11 shows a section view according to plain XI-XI of the sealing station of figure 8;
- figure 12 shows a plan view of a melting means assembly of the device of figure 1;
- figure 13 shows a partial section side view of the melting means assembly of figure 12;
- figure 14 shows a section view according to plain XIV-XIV of the melting means assembly of figure 12.

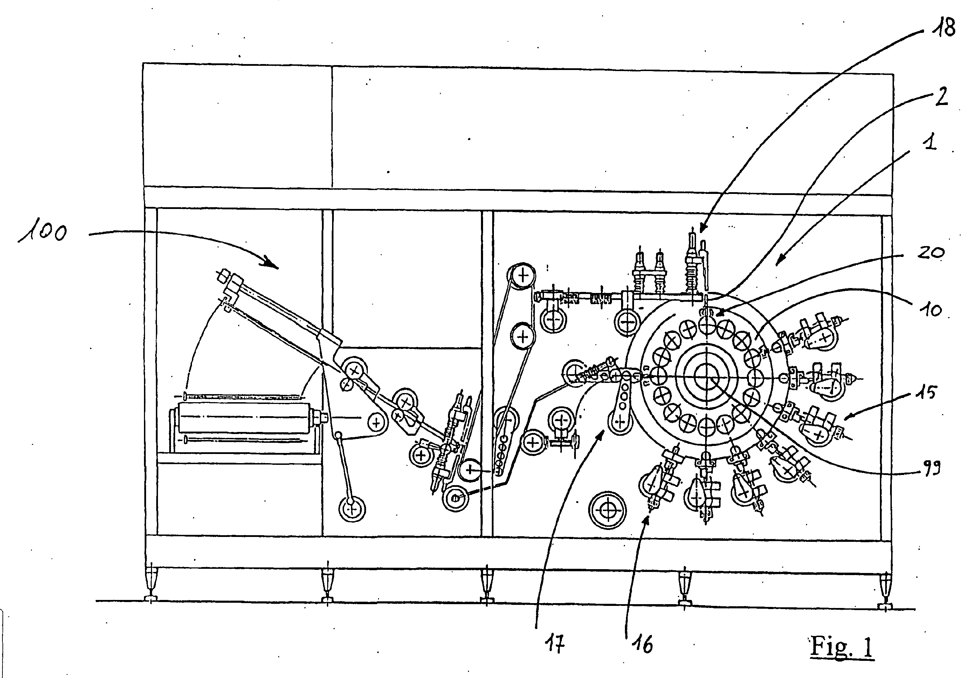

With reference to figures 1-3, numeral 1 indicates the device for closing and sealing containers, object of the present invention, fit inside a automatic packaging machine 100.

Such packaging machine 100 includes a feeding station 18 in the device 1 of each container 2, filled of product and with the bottom 3 open, and a removal station 17 of the container 2 closed and sealed.

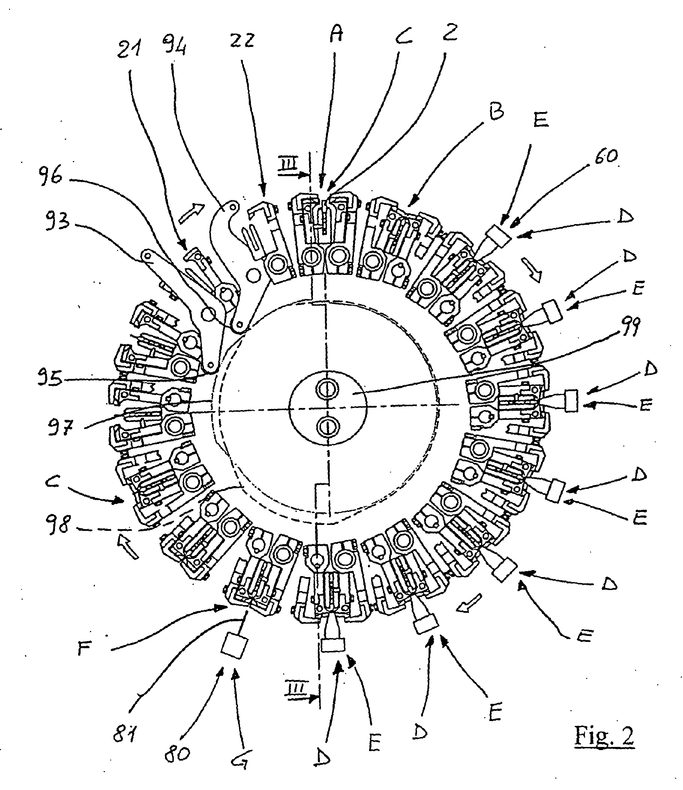

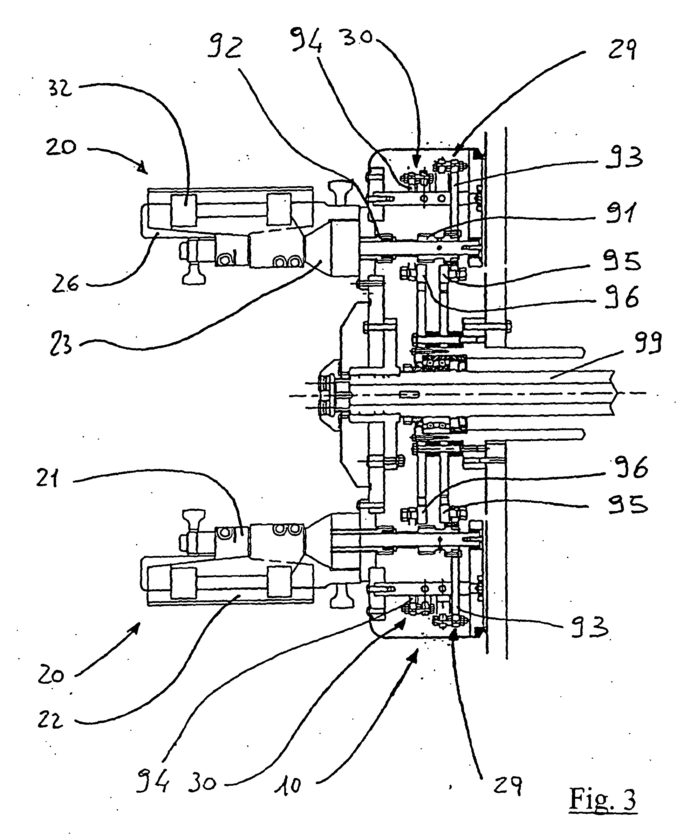

In the preferred embodiment, the device 1 is essentially constituted by a working carousel 10, a plurality of pliers assemblies 20, a plurality of heating stations 15, an upsetting station 16.
The working carousel 10, detailed shown in the figures 2 and 3, is connected to the machine 100 and rotates clockwise around a horizontal axis 99 and supports the plurality of the pliers assemblies 20 that are positioned along the perimeter of the working carousel 10.

The pliers assemblies 20, sixteen of them in the preferred embodiment, are fit to support and to block the containers 2, squeezing their bottom 3 in such a way to isolate the content, so avoiding the discharge of this latter, and at the same time in such a way to carry out a bottom portion 4 of the container 2, in a closing condition B of the same container.

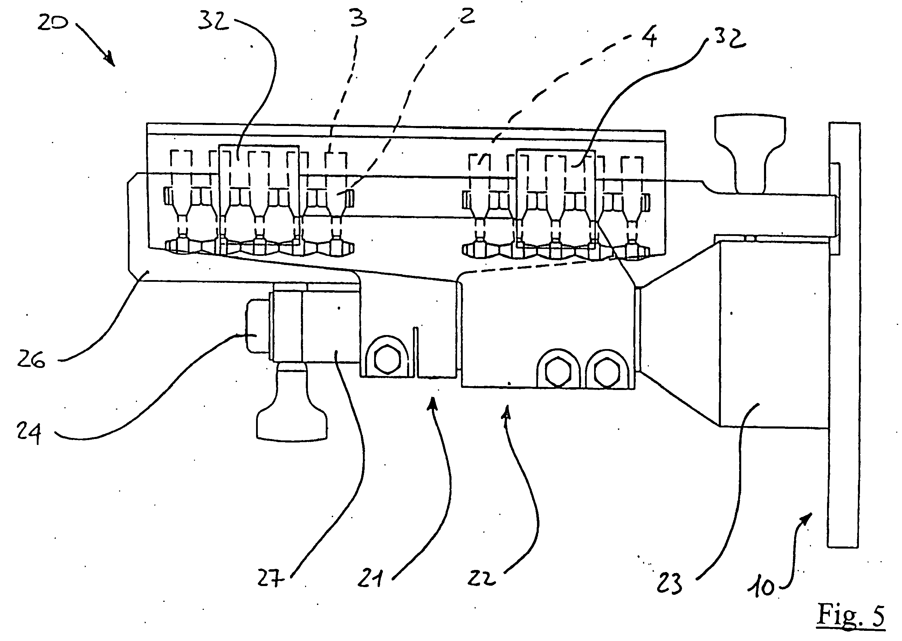

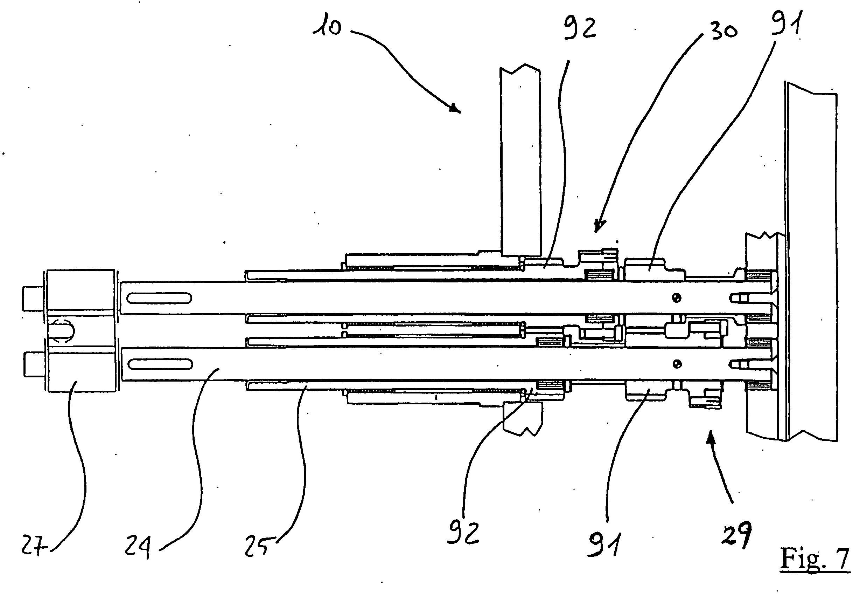

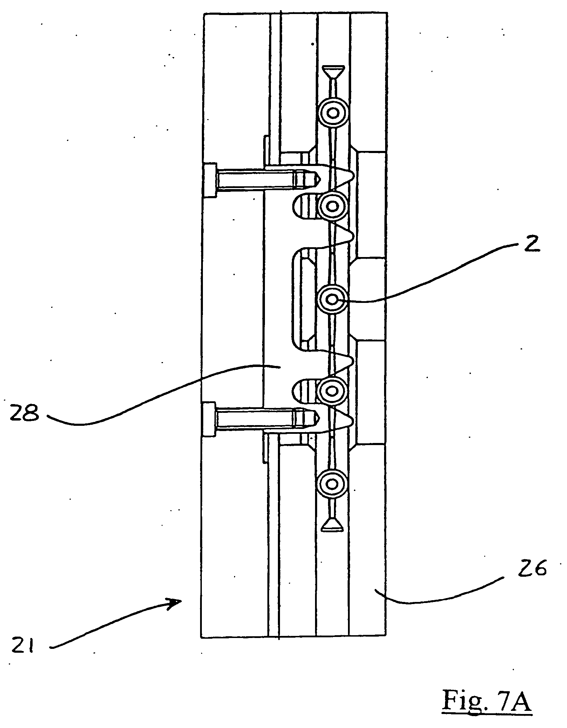

With particular reference to figures 5-6D and 7-7A, each pliers assembly 20 includes a support 23 fixed to the working carousel 10, inner pliers 21 connected to a couple of inner shafts 24 supported by the support 23, external pliers 22 connected to a couple of external shafts 25, coaxial to the inner shafts 24 and supported by the support 23, and shaped in such a way to internally include the inner pliers 21.

With particular reference to figures 2 and 3, each of the two jaws of the inner pliers 21 is connected near to a first end of the related inner shaft 24, while in proximity of the second end the two inner shafts 24 are kinematically connected by means of first toothed means 91, particularly two gear wheels.

First moving means 29 are fixed at the second end of one of the two inner shafts 24 and are constituted by an inner lever 93 an end thereof has first cam follower means 95, for instance consisting of an idle roller, fit for following an inner cam 97, fixed to the working carousel 10 nearly in concentric position and whose profile is included between its horizontal axis 99 and the peripheral pliers assemblies 20.

Similarly, each of the two jaws of one of the external pliers 22 is fixed in proximity of a first end of the related external shaft 25, while in proximity of the second end the two external shafts 25 are kinematically connected through second toothed means 92, for instance two gear wheels.

Second moving means 30 are fixed at the second end of one of the two external shafts 25 and include an external lever 94 an end thereof has second cam follower means 96, for instance an idle roller, fit for following an external cam 98, fixed to the working carousel 10 almost in concentric position and whose profile is included between its horizontal axis 99 and the peripheral pliers assemblies 20.

With particular reference to figures 5, 6A, 7 and 7A, each pliers assembly 20 further include both an envelope seat 26, removably connected to the support 23 and fit for housing a container 2, and a connecting mean 27, which connects the free ends of the couple of inner shafts 24 and removably supports the envelope seat 26 and a centering mean 28, removably connected to a jaw of the inner pliers 21 and fit to correctly position each container 2 inside the envelope seat 26.

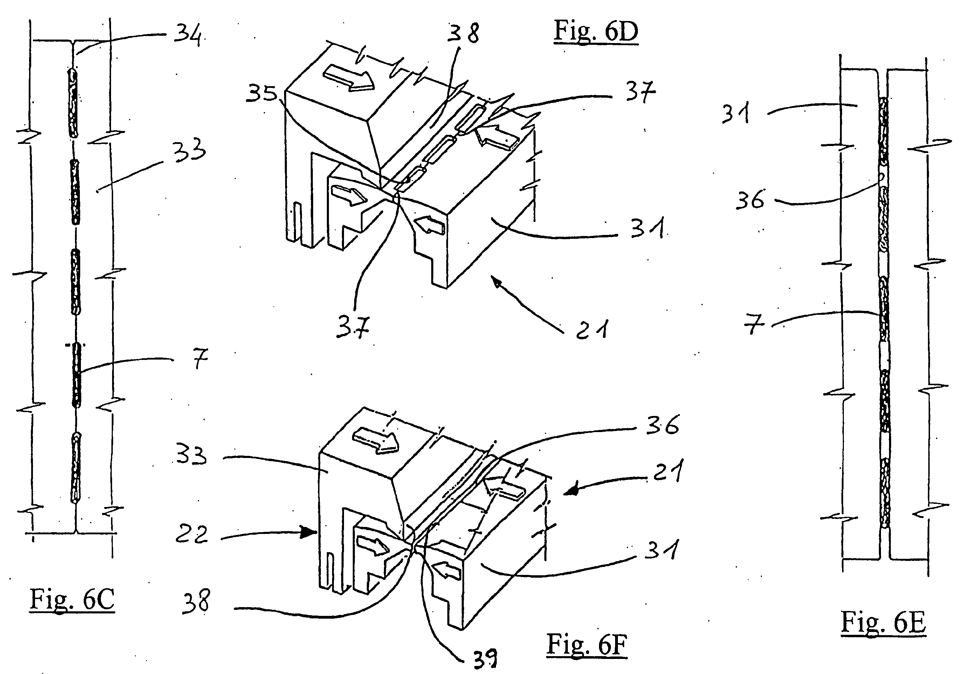

With particular reference to figures from 6A to 6D, each jaw of the inner pliers 21 has at the free end an end portion 31 having a plurality of notches 35 fit for housing the bottom 3 of the container 2 in order to model its melted portion. Particularly in figure 6D, between each notch 35 there is a protrusion 37 which mates a corresponding protrusion carried out in the other jaw of the inner pliers 21, so that to carried out a dividing wall between the bottoms 3 of the containers 2.

In the variant of figure 6B, the protrusion 37 is prominent shaped and carries out a tine 37a which extends from each related notch 35.

At the free end of each jaw of the external pliers 22 it is fixed, through elastic connecting means 32, an external end portion 33 having such a profile to mould the end portion 4 of each container 2 with a nearly flat fin shape, having an end shaped bead 7 with an almost triangular or rectangular with transversal extension section or an almost circular or extended rectangular section.

Each external end portion 33 has a flat abutment 38 such to be opposed, without interference, to the abutment of the facing jaw of the same external pliers 22, in correspondence of its closing.

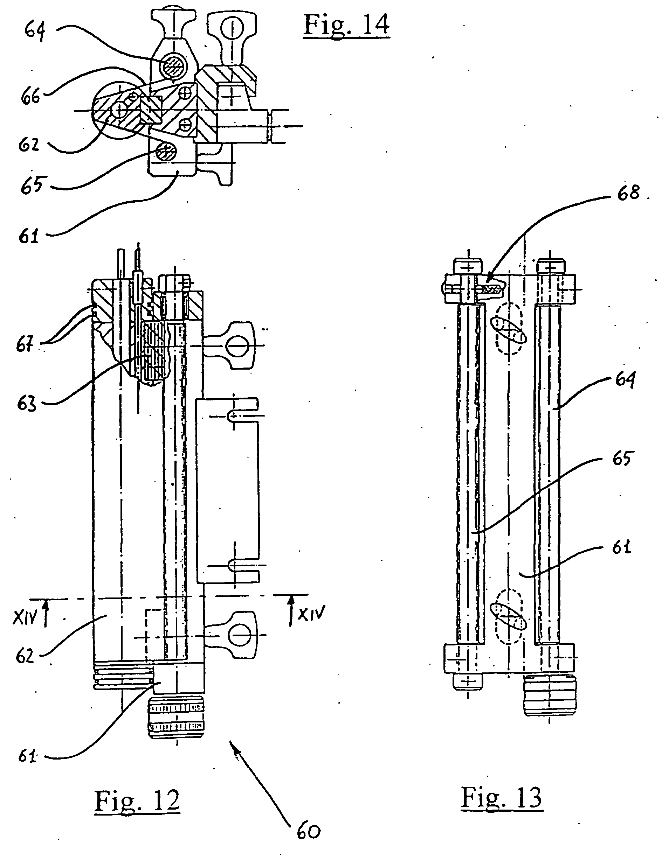

With reference to figures 12-14 and 1, the device further includes a plurality of heating stations 15, which are equidistant and radially positioned around the working carousel 10 and cantilevered connected to the wall of the machine 100. In the preferred embodiment there are seven heating stations 15 including melting means assemblies 60 and fit for melting the bottom portion of each container 2.

Each melting means assembly 60 includes a support element 61 "double T" shaped, having longitudinal dimensions greater than the length of the strip of containers 2 and having rotatably connected an upper roller 64 and a lower roller 65, a heating means 62 shaped in such way to contact each container 2 on the related bottom portion 4, in a heating condition E, and removably connected to the support element 61, by interposing an insulating element 63.

A no-stick band 66 is rolled up around the rollers upper 64 and lower 65, each one provided with elastic spacing means 67 at its ends; said band is stretched by the rollers and is positioned over the heating means 62.

The upper roller 64 can be manually operated and rotates freely in one direction only, while the lower roller 65 includes an elastic stopping device 68, which avoids the free rotation of the roller.

The no-stick band 66 is made of high temperature proof and chemical agents proof material and has a low friction coefficient.

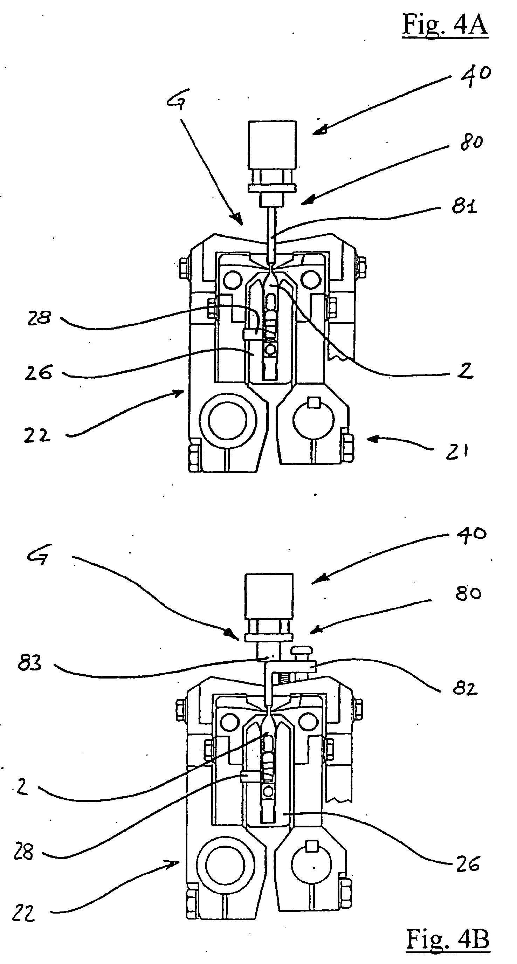

With reference to figures 4A and 4B, the device 1 further includes at least an upsetting station 16 radially positioned around the working carousel 10, having upsetting means 80 and fit to plastically mould the melted bottom portion 4 by compressing this latter according to a direction almost parallel to the longitudinal axis of the container 2.

In the preferred embodiment of the device I, the upsetting means 80 include an external punch 81, shown in figure 4A, directly connected to the corresponding oscillating assembly 40 and fit to be inserted between the jaws of the external pliers 22, in an upsetting condition G in order to mould the melted bottom portion 4 of the container 2.

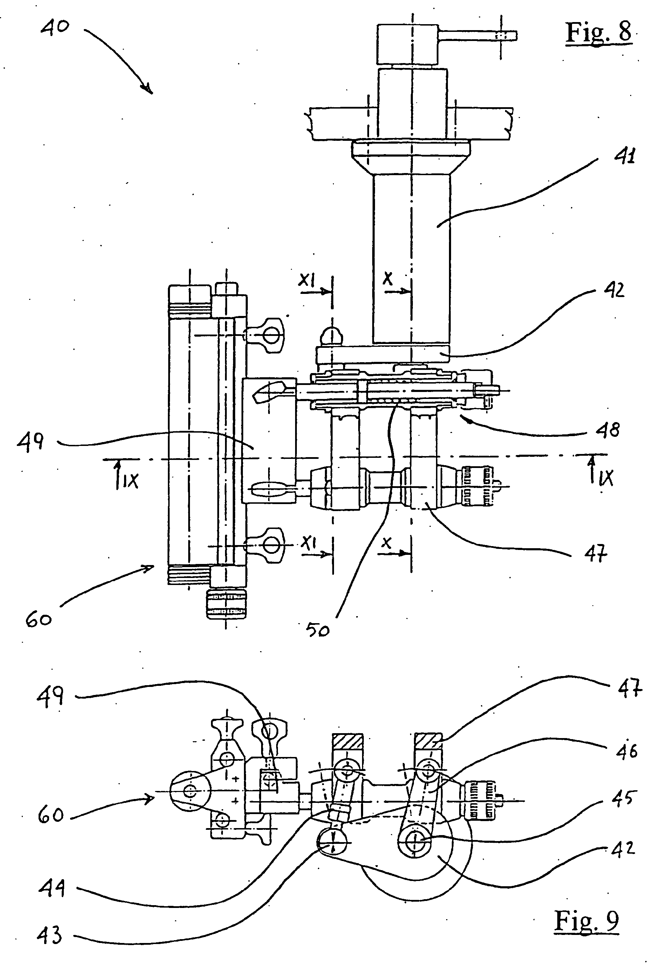

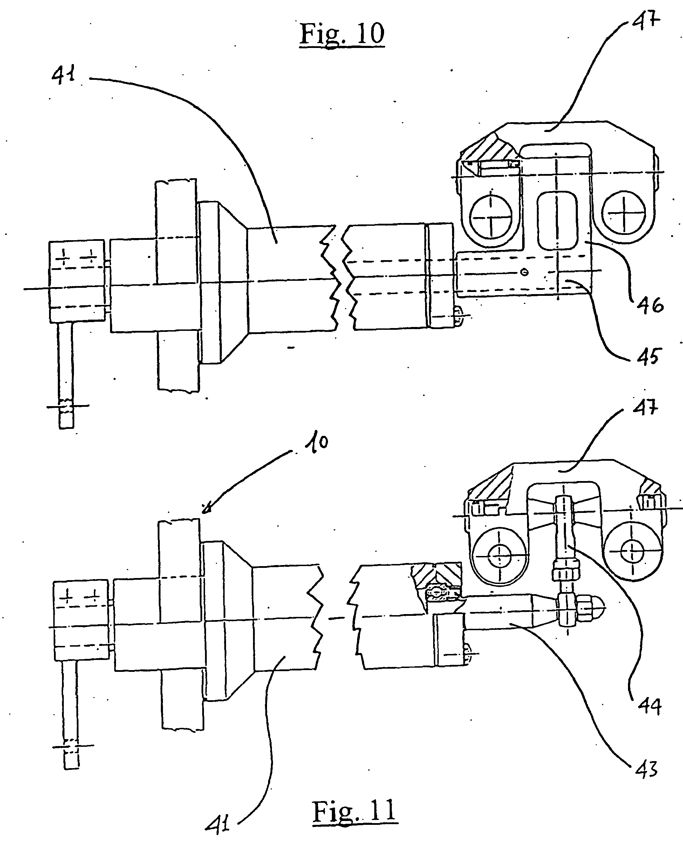

Each melting means assembly 60 and each upsetting means 80 are driven by an oscillating assembly 40, detailed shown in figures 8 - 11, fixed to the device 1 and including a support spindle 41. A flange 42, fixed to said support spindle 41, has an idle pivot 43 an end of which is hinged to an idle connecting rod 44 and a shaft 45, which rotates inside the support spindle 41 and an end of which is connected to a driving connecting rod 46. An oscillating support 47 is connected to each remaining end of the connecting rods, idle 44 and motor 46, and supports by elastic adjustment means 48 a linking means 49, on which the melting means assembly 60 or the upsetting means 80 are removably fixed.

The elastic adjustment means 48 allow the regulation of the axial position of the linking mean 49 with respect to the oscillating support 47, inside which said adjustment means 48 can further slide, by virtue of an elastic mean 50 with the purpose to cushion the contact between the container 2 and the melting means assembly 60 or the upsetting means 80.

The device 1 is entirely controlled by electronic calculation and control means, not shown, fit for controlling the phase relations among the different operating assemblies and the related means, that is between the working carousel 10, the plurality of pliers assemblies 20, particularly the inner pliers 21 and the related external pliers 22, the melting means assemblies 60 and the upsetting means 80.

The operation of the device object of the present invention provides at first some adjustment such as for instance the progressive rolling of the no-stick band 66 of the melting means assembly 60 around the upper roller 64 and its unrolling from the lower roller 65, so that to position the desired portion of the no-stick band 66 in contact with the container 2 in the heating condition E.

Furthermore, the containers 2 in heat-weldable plastic material, which have a bottom 3 open, are picked up with the bottom still open, preferably filled with product, from the feeding station 18 of the packaging machine 100, to which is associated the device object of the invention, and they are transferred closed to the removal station 17.

With reference to a single container 2, or better to a strip of containers 2, since the operation processes of the device 1 are identical for all the treated containers, each strip is picked from the feeding station 18 of the packaging machine 100 and is positioned into the envelope seat 26 of a pliers assembly 20 which is stopped and has open the inner pliers 21 in the inner opening condition A thereof and open also the external pliers 22 in the external opening condition C thereof.

It is opportune to specify that, in alternative, in such condition, in which preferably the containers have the longitudinal axis vertical, these containers can be filled with product if they have been loaded empty in the device.

The calculation and control electronic means activate then the rotation of the working carousel 10 which determines the intermittent discontinuous rotation, step by step, of the plurality of the pliers assemblies 20, fit for transferring the containers 2 through the plurality of heating stations 15 up to reach the removal station 17.

At the end of the first rotation of the working carousel 10, in the pliers assembly 20 that has received the strips of containers 2, the external pliers 22 remains open, while the inner pliers 21 are closed by moving the couple of inner shafts 24, because of the rotation of the inner lever 93, forced by the related cam follower roller 95, which is fit for following the inner cam 97, from the inner opening condition A to the closing condition B, in which the inner pliers 21 squeeze the bottom 3 of each container 2, defining the bottom portion 4 in proximity of the free end.

The jaws of the inner pliers 21 are reciprocally rotated by rotating of the inner shafts 24, which are connected by the mesh between the related first gear wheels 91 of the first moving means 29.

In the preferred embodiment, the working carousel 10 is partially rotated for seven times and in the seven stops the considered assembly pliers 20, the related heating station 15 is moved in direction almost radial with respect to the working carousel 10, so that the melting means assemblies 60 contact the bottom portion 4 of the containers 2 of a strip, for progressively moulding a plain bottom, in correspondence of their heating condition E.

In fact, the no-stick band 66 is fit to transfer the heat produced by the heating means 62 to each bottom portion 4 of the containers 2, also protecting the surface of the heating means 62 by possible contaminations. Besides the spacing elastic means 67 are fit to cushion the contact between the heating means 62 and inner pliers 21 and to maintain at the same time a gap of preset dimensions between these latter.

The motion of each heating station 15 is made by moving the shafts 45 which, rotating with alternate motion, drives, through the driving connecting rod 46, the oscillating support 47, which translates from a disengagement condition, in which it is at the most distant point from the containers 2, to an engagement condition, in which it is at the nearest point from said containers 2.

At the end of the seven discontinuous motions of the working carousel 10 the bottom portion 4 of each container 2 has been melt and progressively moulded as a foot without sharp edges, because the "mould", constituted by the two notches 35 of the couple of facing jaws of the inner pliers 21, and the related protrusions 37 or tines 37a. In such way the whole container strip, after the rotation of the working carousel 10 and the opening of the inner pliers 21, can be extracted from the working carousel, in correspondence of the removal station 17 of the packaging machine 100.

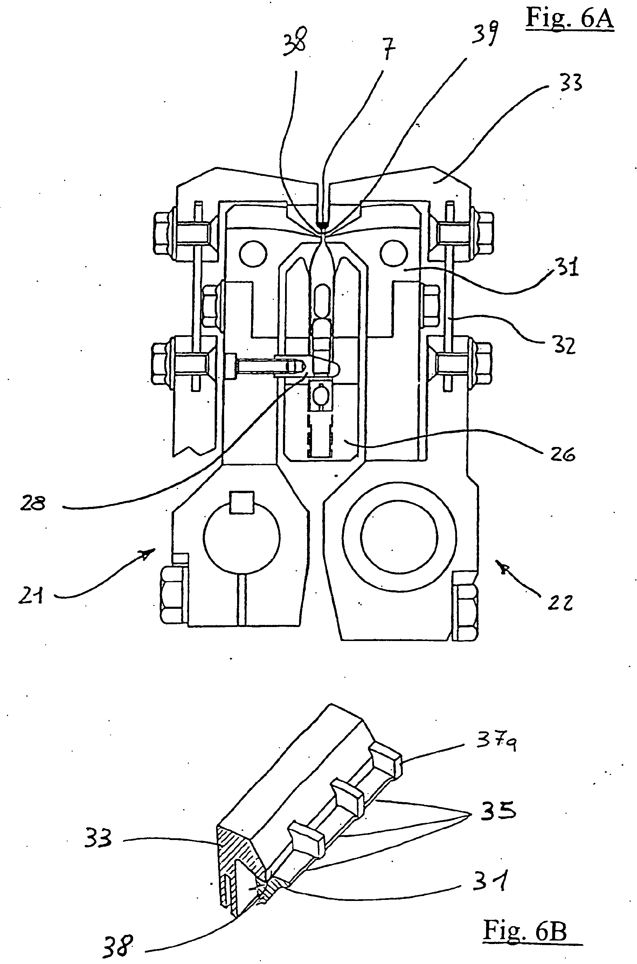

In alternative, as shown in figure 6A, at the end of the eighth rotation of the pliers assembly 20 considered by way of example, the related external pliers 22 are closed by moving the couple of external shafts 25, connected and rotated by the second moving means 30, from an external opening condition C, in which the jaws of the external pliers 22 do not contact the containers 2 of the strip, to the moulding condition F, in which the external pliers 22 close around the inner pliers 21 so that the abutments 38 of the external end portions 33 of the two facing jaws of the external pliers 22, reciprocally face, leaving a slot 39, in order to plastically molding the bottom portion 4 of each container 2.

Therefore the passage of the external pliers 22 from the external opening condition C to the squeezing condition D, and thus the closing condition of said pliers, is operated by the rotation of the external lever 94 because the sliding of the cam follower roller 96 along the external cam 98 and the consequent rotation of an external shaft 25, to which said external lever is connected, and the rotation of the remaining external shaft 25, thanks to the mesh of the second gear wheels 92, keyed to the related external shafts 25.

A further variant of the method for closing and sealing said containers 2, provides that after the closing of the external pliers 22, always after the eighth rotation of the pliers assembly taken in examination, the calculation and control electronic means activate the oscillating assembly 40, by rotating the shaft 45 that causes the oscillation of the upsetting means 80 toward the considered pliers assembly 20 until the external punch 81 penetrates between the external terminal portions 33 of the jaws of the external pliers 22 up to compress the bottom portion 4 of containers of the considered strip. This bottom portion 4 is moulded as flat foot, since the melted plastic is compressed and moulded in the "mould", carried out by the notch 35 and the protrusions 37 or the tines 37a of each jaw of the inner pliers 21, by the flat abutment 38 of the external end portions 33 of the jaws of the external pliers 22 and by the external punch 81 inserted between said jaws.

-Due to the opposite motion of the oscillating assembly 40, the punch 81 moves away from the pliers assembly 20 and the working carousel is further rotated up to the removal station 17, in which the pliers, external 22 and therefore inner 21, are opened by rotating the related levers, respectively external 94 and inner 93, which follow the suitable profile of the cams, respectively external 98 and inner 97.

An further variant of the device 1, shown in figure 4B, provides that the upsetting means 80 include a pliers punch 82, elastically connected to a jaw of the external pliers 22 of each pliers assembly 20 in such way that the punch 82 remains spaced from the bottom portion 4 of each container 2.

A percussion means 83, connected to the corresponding oscillating assembly 40, is activated in such way to push the punch 82 between the jaws of the external pliers 22, in the upsetting condition G, in order to mould the melted bottom portion 4 of the container 2.

A variant of the device 1 provides that the working carousel 10 rotate with discontinuous rotatory motion around a vertical axis, however maintaining the same structure and functionality of the device according to the preferred embodiment.

In figures 6E and 6F it is shown a variant of the heads of the two jaws of the inner pliers 21, in which there are not the notch 35 and the protrusions 37, but, for each jaw, there is a flat wall 36 fit to compress, without contacting the other opposite wall, the melted bottom portion of the container 2.

The device 1 allows moving about 50/60 containers per minute for each product packaging line.

The small dimensions of the device and the horizontal axis position of the working carousel allow to limit the overall dimension, especially transversal, of the machine in which said device is inserted, improving in such way the inner accessibility from the operator and reducing notably the surface submitted to the laminar flow, in which such machine is inserted during the packaging of the products in the containers 2.

The main advantage of the present invention consists in providing a method and a device for closing and sealing the containers having a end portion sealed with a fin or winglet shape, having a sealed end bead shaped in such way to constitute a support base for the steady vertical positioning of the container, single or together with others in strip, or an abutment surface adequate to allow the transfer of said containers in single line, each of them being pushed by the preceding one, along a direction parallel to the longitudinal axis of the containers.

Another advantage is to provide a method and a device to allow carrying out sealed bottoms, and particularly end beads, having rounded shape, without sharp edges and/or cutting lines.

Further advantage is to provide a method and a device providing a progressive heating, according to predefined and different times and heating temperatures of small value, fit to reduce the sudden thermal change over the product to be packaged, which is inside the container.

Another advantage consists in providing a device which allows cleaning or replacing the surfaces of the sealing means, which contact the plastic material of the containers, when dirtied and stained by residual plastic parts, in such way to keep unaffected the efficiency in the heat transmission and thus to guarantee the molding of end portions sealed in proper and regular way.

Further advantage is to provide a device having support means of the containers, single or jointed in strips, which are moulded according to the dimensions and the shape of the containers, but which allow size change over operations quick, simple not requiring skilled labour and long machine stops.

Another advantage is to provide a method and a device that allow moving, closing and sealing the containers along a vertical plan, so allowing to limit the overall dimensions, especially the transversal dimension, of the machine in which said device is fit, improving in this way the inner accessibility from the operator and remarkably reducing the surface subject to the laminar flow.

## Claims

1. Device for closing and sealing containers (2) made of heat-weldable plastic material, having a bottom (3) open, picked up open from a feeding station (18) of a packaging machine (100) and transferred closed to a removal station (17), said device (1) being including:
- a working carousel (10) discontinuously rotating and supporting a plurality of pliers assemblies (20), positioned along the perimeter of the working carousel (10) and fit for supporting and stopping at least a container (2), squeezing the bottom (3) thereof, in such a way to carry out a bottom portion (4), in a closing condition (B) of said container;
- a plurality of heating stations (15), positioned around the working carousel (10) and having melting means assemblies (60), having an alternative motion in a direction almost radial with respect to the working carousel (10), in a heating condition (E) of said melting means assemblies (60);
the working carousel (10) being stopped in the heating stations (15) in such a way that the related melting means assembly (60) contact alternatively at least a container (2) to progressively melt the related bottom portion (4) thereof and to compress this latter along a direction nearly transversal to the longitudinal axis of the container (2).

2. Device according to claim 1 **characterized in that** further include at least an upsetting station (16), positioned radially around the working carousel (10), having upsetting means (80) and fit to plastically mould the melted bottom portion (4), by compressing this latter according to a direction nearly parallel to the longitudinal axis of the container (2); said upsetting station (16) having a oscillatory motion with direction nearly radial with respect to the working carousel (10), in such a way to allow the upsetting means (80) contacting the bottom portion (4), in upsetting condition (G).

3. Device according to claim 1 **characterized in that** the working carousel (10) rotates with intermittent rotatory motion around a horizontal axis.

4. Device according to claim 1 **characterized in that** the working carousel (10) rotates with intermittent rotatory motion around a vertical axis.

5. Device according to the claim 1 **characterized in that** each pliers assembly (20) includes:
- a support (23) fixed to the working carousel (10);
- inner pliers (21) whose jaws are connected to a couple of inner shafts (24) supported by the support (23);
- external pliers (22) whose jaws are connected to a couple of external shafts (25), coaxial to the inner shafts (24) and supported by the support (23), and shaped in such a way to internally include said inner pliers (21);
- an envelope seat (26) fit for housing at least a container (2) and removably connected to the support (23);
- a support means (27) which connects the free ends of the couple of inner shafts (24) and removably supports the envelope seat (26);
- a centering means (28), removably connected to a jaw of the inner pliers (21), fit for correctly positioning each container (2) inside the envelope seat (26);
the inner pliers (21) being driven by the couple of inner shafts (24) from a inner opening condition (A), in which each container (2) is inserted into or disengaged from the envelope seat (26), to the closing condition (B), in which said inner pliers (21) squeeze the bottom (3) of each container (2); the external pliers (22) being driven by the couple of external shaft (25) from an external opening condition (C), in which the jaws of the external pliers (22) are not in contact with the container (2), to a moulding condition (F), in which said external pliers (22) are closed over the inner pliers (21), so plastically moulding the bottom portion (4) of each container (2); the two inner shafts (24) being rotated by the first moving means (29) and the two external shaft (25) being rotated by second moving means (30).

6. Device according to claim 5 **characterized in that** the free e nd of each jaw of the inner pliers (21) is removably fixed to an inner end portion (31).

7. Device according to claim 6 **characterized in that** the free end of the inner end portion (31) has a plurality of notches (35) ending with at least a protrusion (37, 37a) fit for housing the bottom (3) of the container (2) and for moulding said bottom in the closing condition (B).

8. Device according to claim 6 **characterized in that** the free ends of the inner end portions (31) of the inner pliers (21) have facing walls (36) carrying out a slot (39) in the closing condition (B).

9. Device according to claim 5 **characterized in that** an external end portion (33) is removably fixed to the free end of each jaw of the external pliers (22), through elastic connection means (32).

10. Device according to claim 9 **characterized in that** the external end portions (33) are shaped for molding the bottom portion (4) of each container (2) with an almost flat fin shape and having shaped end bead (7) with a nearly triangular or rectangular section with transversal extension or almost circular or rectangular elongated section.

11. Device according to claim 5 **characterized in that** the two inner shafts (24) of the inner pliers (21) are kinematically connected by means of first toothed means (91).

12. Device according to claim 11 **characterized in that** the first moving means (29) include at least an inner lever (93) fixed to at least an inner shaft (24) of the inner pliers (21) and rotatably supporting first cam follower means (95) fit for following an inner cam (97) of the working carousel (10).

13. Device according to claim 5 **characterized in that** the two external shaft (25) of the external pliers (22) are kinematically connected by means of second toothed means (92).

14. Device according to claim 13 **characterized in that** the second moving means (30) include at least an external lever (94) fixed to at least, an external shaft (25) of the external pliers (22) and rotatably supporting second cam follower means (96) fit for following an external cam (98) of the working carousel (10).

15. Device according to claims 1 or 2 **characterized in that** each of the melting means assembly (60) and the upsetting means (80) are driven by an oscillating assembly (40) including:
- a support spindle (41) having fixed a flange (42) having an idle pivot (43), on which it is hinged an end of an idle connecting rod (44);
- a shaft (45) rotatably supported inside the support spindle (41) and connected to an end of a motor connecting rod (46);
- an oscillating support (47) connected to each remaining end of the connecting rods, idle (44) and motor (46), and supporting through elastic adjustment means (48) a linking means (49), to which the melting means assembly (60) or the upsetting means (80) are removably fixed;
said shaft (45), rotating with alternate motion, moves, through the connecting rod motor (46), the oscillating support (47), translating from a disengagement condition, in which said oscillating support (47) is at the farthest point from the container (2), to an engagement condition, in which it is at the nearest point.

16. Device according to claim 15 **characterized in that** the elastic adjustment means (48) allow regulating the axial position of the linking mean (49) with respect to the oscillating support (47), into which said adjustment means (48) can further slide, by virtue of an elastic mean (50) in order to cushion the contact between the container (2) and the melting means assembly (60) or the upsetting means (80).

17. Device according to claim 1 **characterized in that** each melting means assembly (60) includes:
- a support element (61) having rotatably connected two rollers, upper (64) and lower (65);
- a heating means (62) shaped in such a way to contact at least a container (2) on the related bottom portion (4), in the heating condition (E), and removably connected to the support element (61), by interposing at least an insulating element (63);
- a no-stick band (66) positioned on the heating means (62) and rolled up around the roller upper (64) and lower (65), by means of which said band is stretched;
- elastic spacing means (67) assembled on the heating mean (62) in its ends;
the no-stick band (66) being fit for transferring the heat produced by the heating mean (62) to the bottom portion (4) of the container (2); the elastic spacing means (67) being fit for cushioning the contact between the heating mean (62) and the inner pliers (21) and to maintain at the same time a gap of preset dimensions between these latter.

18. Device according to claim 17 **characterized in that** the upper roller (64) can be manually driven and rotates freely only in one direction.

19. Device according to claim 17 **characterized in that** the lower roller (65) includes an elastic stopping device (68) which avoids the free rotation of said roller.

20. Device according to claim 17 **characterized in that** the no-stick band (66) is made of high temperature proof and chemical agents proof material and has a very low friction coefficient.

21. Device according to claim 2 **characterized in that** the upsetting means (80) include an external punch (81) which can be fit into the pliers assembly (20), in an upsetting condition (G) in which external punch (81) compresses the melted bottom portion (4) of the container (2).

22. Device according to claim 2 and claim 15 **characterized in that** the upsetting means (80) include a pliers punch (82), fixed to each assembly pliers (20) and moved, in an upsetting condition (G), by a percussion means (83) coupled to the corresponding oscillating assembly (40).

23. Device according to claim 1 **characterized in that** is controlled by calculation and control electronic means fit to control the phase relations among the working carousel (10), the plurality of pliers assemblies (20) and the plurality of heating stations (15).

24. Method for closing and sealing containers (2) made of heat-weldable plastic material, having a bottom (3) open using the device of the claims 1-23 the method comprising :
- inserting at least a container (2) inside a pliers assembly (20), connected and supported by a working carousel (10) rotating with intermittent motion;
- blocking the container (2) by virtue of the pliers assembly (20) which closes said container (2) in the bottom (3), carrying out a bottom portion (4);
- heating the bottom portion (4) up to the melting thereof, by melting means assemblies (60);
- to compressing said melted bottom portion (4) according to a direction almost parallel to the longitudinal axis of the container (2);
- releasing the container (2) and to remove it from the working carousel (10).

25. Method according to claim 24 **characterized in that** the compression of the melted bottom portion (4) of the container (2) is carried out by the same melting means assemblies (60) which provide to heat said container.

26. Method according to claim 24 **characterized in that** further provides, after the compression along a longitudinal direction, a transversal compression of the melted bottom portion (4) operated by external pliers (22) of each pliers assembly (20) along a direction transversal to the longitudinal axis of the container (2), in a moulding condition (F).

27. Method according to claim 26 **characterized in that** further includes, after the transversal compression, an upsetting compression carried out by upsetting means (80), according to a direction almost parallel to the longitudinal axis of the container (2), in an upsetting condition (G).

28. Method according to claim 24 **characterized in that** includes the progressive substitution of the portion of no-stick band (66) contacting the container (2) by wrapping said band around the upper roller (64) and by unrolling said band from the lower roller (65).

29. Method according to claim 24 **characterized in that** the insertion of at least a container (2) inside a pliers assembly (20) is carried out after filling the container.

30. Method according to claim 24 **characterized in that** further provides the filling of at least a container (2) after inserting the empty container (2) inside a pliers assembly (20).

## Patentansprüche

1. Vorrichtung zum Verschließen und Versiegeln von Behältern, die aus einem heißschweißbaren Plastikmaterial hergestellt sind, die einen offenen Boden (3) aufweisen, die offen von einer Zuführstation (18) einer Packmaschine (100) abgenommen und geschlossen zu einer Entnahmestation überführt werden, wobei die Vorrichtung (1) beinhaltet:
- ein Arbeitskarussel (10), das diskontinuierlich rotiert und eine Mehrzahl von Zangenanordnungen (20) unterstützt, die entlang dem Umfang des Arbeitskarussels (10) angeordnet sind und ausgelegt sind zum Unterstützen und Anhalten von zumindest einem Behälter (2), wobei die Unterseite (3) desselben zusammengedrückt wird, in einer solchen Weise, um einen unteren Abschnitt (4) in eine Schließposition (B) des Behälters zu überführen;
- eine Mehrzahl von Erwärmungsstationen (15), die um das Arbeitskarussel (10) angeordnet sind und Schmelzmittelanordnungen (60) aufweisen, die eine alternative Bewegung in einer Richtung im wesentlichen radial mit Bezug auf das Arbeitskarussel (10) aufweisen in eine Erwärmungsbedingung (E) der Schmelzmittelanordnung (60);
wobei das Arbeitskarussel (10) an den Erwärmungsstationen (15) in einer solchen Art und Weise gestoppt wird, daß die entsprechende Schmelzmittelanordnung (60) alternativ zumindest einen Behälter (2) berühren kann, um stufenweise den entsprechenden unteren Abschnitt (4) desselben zu schmelzen und diesen entlang einer Richtung im wesentlichen transvers zu der Längsachse des Behälters (2) zusammenzudrücken.

2. Vorrichtung gemäß Anspruch 1, **dadurch gekennzeichnet, daß** des weiteren an zumindest eine Aufstellstation (16) beinhaltet ist, die radial um das Arbeitskarussel (10) angeordnet ist, die ein Aufstellmittel (80) aufweist und ausgelegt ist, um den geschmolzenen unteren Abschnitt (4) plastisch zu formen, indem dieser entsprechend einer Richtung im wesentlichen parallel zu der Längsachse des Behälters (2) zusammengedrückt wird; wobei die Aufstellstation (16) eine schwingende Bewegung in einer im wesentlichen radialen Richtung mit Bezug auf das Arbeitskarussel (10) aufweist, derart, um es dem Aufstellmittel (80) zu ermöglichen, den unteren Abschnitt (4) in einer Aufstellbedingung (G) zu berühren.

3. Vorrichtung gemäß Anspruch 1, **dadurch gekennzeichnet, daß** das Arbeitskarussel (10) mit einer periodischen Rotationsbewegung um eine horizontale Achse rotiert.

4. Vorrichtung gemäß Anspruch 1, **dadurch gekennzeichnet, daß** das Arbeitskarussel (10) mit einer periodischen Rotationsbewegung um eine vertikale Achse rotiert.

5. Vorrichtung gemäß Anspruch 1, **dadurch gekennzeichnet, daß** jede Zangenanordnung (20) beinhaltet:
- ein Stützelement (23) befestigt an dem Arbeitskarussel (10);
- innere Zangen (21), deren Backen mit einem Paar innerer Wellen (24) verbunden sind, die durch das Stützelement (23) unterstützt werden;
- äußere Zangen (22), deren Backen mit einem Paar äußerer Wellen (25) verbunden sind, die koaxial zu den inneren Wellen (24) angeordnet sind und durch das Stützelement (23) gestützt werden und in einer solchen Art ausgebildet sind, um im Inneren die inneren Zangen (21) zu beinhalten;
- einen Einhüllsitz (26), ausgelegt zum Aufnehmen von zumindest einem Behälter (2) und lösbar verbunden mit dem Stützelement (23);
- ein Unterstützungsmittel (27), welches mit den freien Enden des Paares innerer Wellen (24) verbunden ist und lösbar den Einhüllsitz (26) stützt;
- ein Zentriermittel (28), welches lösbar mit einer Backe der inneren Zangen (21) verbunden ist, ausgelegt zum korrekten Positionieren jenes Behälters (29) innerhalb des Einhüllsitzes (26);
wobei die inneren Zangen (21) durch das Paar innerer Wellen (24) angetrieben werden von einer inneren Öffnungsbedingung (A), in der jeder Behälter (2) eingesetzt innen oder herausgenommen aus dem Einhüllsitz (26) wird, zu einer Schließbedingung (B), in der die inneren Zangen (21) das Unterteil (3) jedes Behälters (2) zusammendrücken; wobei die äußeren Zangen (22) angetrieben werden durch das Paar der äußeren Welle (25) von einer äußeren Öffnungsbedingung (C), in der die Backen der äußeren Zangen (22) nicht im Kontakt mit dem Behälter (2) sind, zu einer Formbedingung (F), in der die äußeren Zangen (22) über den inneren Zangen (21) geschlossen werden, um plastisch den Bodenabschnitt (4) jedes Behälters (2) zu bilden; wobei die zwei inneren wellen (24) durch ein erstes Antriebsmittel (29) rotiert werden und die zwei äußeren Wellen (25) durch ein zweites Bewegungsmittel (30) rotiert werden.

6. Vorrichtung gemäß Anspruch 5, **dadurch gekennzeichnet, daß** das freie Ende jeder Backe der inneren Zangen (21) lösbar an einem inneren Endabschnitt (31) befestigt ist.

7. Vorrichtung gemäß Anspruch 6, **dadurch gekennzeichnet, daß** das freie Ende des inneren Endabschnittes (31) eine Mehrzahl von Aussparungen (35) aufweist, die mit zumindest zwei Vorsprüngen (37, 37a) enden, die für das Aufnehmen des unteren Abschnittes (3) des Behälters (2) und für ein Formen der Unterseite in der Schließbedingung (B) ausgelegt sind.

8. Vorrichtung gemäß Anspruch 6, **dadurch gekennzeichnet, daß** die freien Enden der inneren Endabschnitte (31) der inneren Zangen (21) gegenüberliegende wände (36) aufweisen zum Bilden eines Schlitzes (39) in der Schließbedingung (B).

9. Vorrichtung gemäß Anspruch 5, **dadurch gekennzeichnet, daß** ein äußerer Endabschnitt (33) lösbar befestigt ist an dem freien Ende jeder Backe der äußeren Zangen (22) durch ein elastisches Verbindungsmittel (32).

10. Vorrichtung gemäß Anspruch 9, **dadurch gekennzeichnet, daß** die äußeren Endabschnitte (33) gebildet sind zum Bilden des unteren Abschnittes (4) jedes Behälters (2) mit einer beinahe flachen Finnenform und einem geformten Endwulst (7) mit beinahe dreieckigem oder rechteckigem Querschnitt mit einer transversen Erstreckung oder zumindest mit einem rund oder rechteckig verlängerten Abschnitt.

11. Vorrichtung gemäß Anspruch 5, **dadurch gekennzeichnet, daß** die zwei inneren Wellen (24) der inneren Zangen (21) kinematisch durch ein erstes gezahntes Mittel (91) verbunden sind.

12. vorrichtung gemäß Anspruch 11, **dadurch gekennzeichnet, daß** das erste Bewegungsmittel (29) zumindest einen inneren Hebel (93) aufweist, der zumindest an einer inneren Welle (24) der inneren Zangen (21) befestigt ist und rotierbar ein erstes Nockenmitnehmermittel (95) stützt, welches ausgelegt ist zum Folgen einer inneren Nocke (97) des Arbeitskarussels (10).

13. Vorrichtung gemäß Anspruch 5, **dadurch gekennzeichnet, daß** die zwei äußeren Wellen (25) der äußeren Zangen (22) kinematisch mittels einem zweiten gezahnten Mittel (92) verbunden sind.

14. Vorrichtung gemäß Anspruch 13, **dadurch gekennzeichnet, daß** das zweite Bewegungsmittel (30) zumindest einen äußeren Hebel (94) beinhaltet, der mit zumindest einer äußeren Welle (25) der äußeren Zangen (22) verbunden ist und rotierbar ein zweites Nockenmitnehmermittel (96) unterstützt, welches zum Folgen einer äußeren Nocke (98) des Arbeitskarussels (10) ausgelegt ist.

15. Vorrichtung gemäß Anspruch 1 oder 2, **dadurch gekennzeichnet, daß** jede der Schmelzmittelanordnungen (60) und der Aufstellmittel (80) durch eine schwingende Anordnung (40) angetrieben wird, die beinhaltet:
- eine Stützspindel (41), die einen Flansch (42) aufweist, der einen Stillstandszapfen (43) aufweist, an dem es an einem Ende einer Stillstandsverbindungsstange (44) befestigt ist;
- eine Welle (45), die rotierbar innerhalb der Stützspindel (41) gestützt wird und mit einem Ende einer Motorverbindungsstange (46) verbunden ist;
- ein schwingendes Stützmittel (47), das mit jedem verbleibenden Ende der verbindungsstangen verbunden ist, Stillstand (44) und Motor (46) und unterstützt durch elastische Anpaßmittel (48) ein Verbindungsmittel (49), an dem die Schmelzmittelanordnung (60) oder die Aufstellmittelanordnung (80) lösbar befestigt ist; wobei die Welle (45), die mit einer alternierenden Bewegung angetrieben wird, das schwingende Stützmittel (47) durch den Verbindungsstangenmotor (46), in dem von einer Lösbedingung, in der das Schwingungsmittel (47) sich an einem entferntesten Punkt von dem Behälter (2) befindet zu einer Eingriffsbedingung, in der es an dem nächsten Punkt ist.

16. Vorrichtung gemäß Anspruch 15, **dadurch gekennzeichnet, daß** das elastische Anpaßmittel (48) es ermöglicht, die axiale Position des Verbindungsmittels (49) mit Bezug auf die schwingende Unterstützung (47) einzustellen, indem das Anpaßmittel (48) durch ein elastisches Mittel (50) des weiteren gleiten kann, um den Kontakt zwischen dem Behälter (2) und der Schmelzmittelanordnung (60) oder der Aufstellmittel (80) abzufedern.

17. Vorrichtung gemäß Anspruch 1, **dadurch gekennzeichnet, daß** jede Schmelzmittelanordnung (60) beinhaltet:
- ein Unterstützungselement (61), das zwei Rollen, obere (64) und untere (65) aufweist, die rotierbar verbunden sind;
- ein Erwärmungsmittel (62), das in einer solchen Weise geformt ist, um zumindest einen Behälter (2) an dem entsprechenden unteren Abschnitt (4) während der Erwärmungsbedingung (E) zu berühren, ist entfernbar verbunden mit dem Unterstützungselement (61), indem zumindest ein isolierendes Element (63) dazwischen angeordnet ist;
- ein nicht klebendes Band (66), das auf dem Erwärmungselement (62) angeordnet ist und um die obere Rolle (64) und die untere (65) gewickelt ist durch Mittel, die das Band strecken;
- ein elastisches Abstandsmittel (67), die auf dem Erwärmungselement (62) an ihren Enden angeordnet ist;
wobei das nicht klebende Band (66) für die Übertragung der Wärme, die durch das Erwärmungselement (62) erzeugt wird, zu dem unteren Abschnitt (4) des Behälters (2) ausgelegt ist; wobei das elastische Abstandsmittel (67) für das Abpolstern des Kontaktes zwischen dem Erwärmungsmittel (62) und den inneren Zangen (21) ausgelegt ist und um zur selben Zeit einen Abstand vorgegebenen Ausmaßes zwischen den Vorgenannten zu erzeugen.

18. Vorrichtung gemäß Anspruch 17, **dadurch gekennzeichnet, daß** die obere Rolle (64) manuell angetrieben werden kann und frei nur in eine Richtung rotiert.

19. Vorrichtung gemäß Anspruch 17, **dadurch gekennzeichnet, daß** die untere Rolle (65) ein elastisches Anhalteelement (68) beinhaltet, welches die freie Rotation der Rolle verhindert.

20. Vorrichtung gemäß Anspruch 17, **dadurch gekennzeichnet, daß** das nicht klebende Band (66) aus einem hochtemperaturstabilen und chemikalienstabilen Material hergestellt ist und einen sehr geringen Reibwert aufweist.

21. Vorrichtung gemäß Anspruch 2, **dadurch gekennzeichnet, daß** das Aufstellmittel (80) einen äußeren Dorn (81) beinhaltet, der in die Zangenanordnung (20) eingepaßt werden kann bei einer Aufstellbedingung (G), in der der äußere Dorn (81) den geschmolzenen unteren Abschnitt (4) des Behälters (2) zusammendrückt.

22. . Vorrichtung gemäß Anspruch 2 und Anspruch 15, **dadurch gekennzeichnet, daß** das Aufstellmittel (80) einen Zangendorn (82) beinhaltet, der an jeder Zangenanordnung (20) befestigt ist und in einer Aufstellbedingung (G) durch ein Schlagmittel (83) bewegt wird, das mit der entsprechenden korrespondierenden schwingenden Anordnung (40) verbunden ist.

23. Vorrichtung gemäß Anspruch 1, **dadurch gekennzeichnet, daß** die Vorrichtung durch ein elektronisches Berechnungs- und Steuerungsmittel gesteuert wird, das ausgelegt ist, um die Phasenzusammenhänge auf dem Arbeitskarussel (10) die Mehrzahl der Zangenordnungen (20) und die Mehrzahl der Erwärmungsstationen (15) zu steuern.

24. Verfahren zum Verschließen und Versiegeln von Behältern (2), die aus einem heißschweißbaren Plastikmaterial hergestellt sind und einen offenen Boden (3) aufweisen, wobei die Vorrichtung gemäß der Ansprüche 1 bis 23 verwendet wird, wobei das Verfahren aufweist:
- Einsetzen von zumindest einem Behälter (2) innerhalb einer Zangenanordnung (20), die verbunden und gestützt wird durch ein Arbeitskarussel (10), das mit einer periodischen Bewegung rotiert;
- Festklemmen des Behälters (2) durch die Zangenanordnung (20), die den Behälter (2) an der Unterseite (3) schließt, wodurch ein unterer Abschnitt (4) erzeugt wird;
- Erwärmen des unteren Abschnittes (4) bis zur dessen Schmelzen durch eine Schmelzmittelanordnung (60);
- Zusammenpressen des geschmolzenen unteren Abschnittes (4) gemäß einer Richtung beinahe parallel zu der Längsachse des Behälters (2);
- Lösen des Behälters (2) und Entfernen von dem Arbeitskarussel (10).

25. . Verfahren gemäß Anspruch 24, **dadurch gekennzeichnet, daß** das Zusammenpressen des geschmolzenen unteren Abschnittes (4) des Behälters (2) durch dieselbe Schmelzmittelanordnung (60) durchgeführt wird, die für das Erwärmen des Behälters vorgesehen ist.

26. Verfahren gemäß Anspruch 24, **dadurch gekennzeichnet, daß** das Verfahren des weiteren bereitstellt, nach der Kompression entlang einer Längsrichtung ein transversales Zusammendrücken des geschmolzenen unteren Abschnittes (4) vorgenommen durch die äußeren Zangen (22) jeder Zangenanordnung (20) entlang einer Richtung transversal einer Längsachse des Behälters (2) in einer Formbedingung (F) .

27. Verfahren gemäß Anspruch 26, **dadurch gekennzeichnet, daß** das Verfahren des weiteren beinhaltet, nach dem transversalen Zusammendrücken ein aufrichtendes Zusammendrücken durch das Aufrichtmittel (80) durchgeführt wird gemäß einer Richtung im wesentlichen parallel zu einer Längsachse des Behälters (2) in einer Aufrichtbedingung (G).

28. Verfahren gemäß Anspruch 24, **dadurch gekennzeichnet, daß** das Verfahren des weiteren beinhaltet das stufenweise Ersetzen eines Abschnittes des nicht klebenden Bandes (66), das den Behälter (2) mittels eines Wickelns des Bandes um die obere Rolle (64) und bei Abwickeln des Bandes von der unteren Rolle (65) berührt.

29. Verfahren gemäß Anspruch 24, **dadurch gekennzeichnet, daß** das Einsetzen von zumindest einem Behälter (2) in die Zangenanordnung (20) nach dem Füllen des Behälters durchgeführt wird.

30. Verfahren gemäß Anspruch 24, **dadurch gekennzeichnet, daß** das Verfahren des weiteren das Füllen von zumindest einem Behälter (2) nach dem Einsetzen des leeren Behälters (2) in die Zangenanordnung (20) vorsieht.

## Revendications

1. Dispositif pour fermer et sceller des récipients (2) constitués d'une matière plastique thermosoudable, présentant un fond (3) ouvert, saisi ouvert à partir d'une station d'alimentation (18) d'une machine de conditionnement (100) et transféré fermé jusqu'à une station d'enlèvement (17), ledit dispositif (1) comprenant:
- un carrousel de travail (10) tournant d'une façon discontinue et supportant une pluralité d'ensembles de pinces (20) positionnés le long du périmètre du carrousel de travail (10) et adaptés pour supporter et stopper au moins un récipient (2), serrer le fond (3) de celui-ci de manière à réaliser une partie de fond (4) dans une condition fermée (B) dudit récipient;
- une pluralité de stations de chauffage (15) positionnées autour du carrousel de travail (10) et comprenant des ensembles de moyens de fusion (60), effectuant un mouvement alternatif dans une direction presque radiale par rapport au carrousel de travail (10) dans une condition de chauffage (E) desdits ensembles de moyens de fusion (60);
le carrousel de travail (10) étant stoppé dans les stations de chauffage (15) de telle sorte que l'ensemble de moyens de fusion concerné (60) entre en contact alternativement avec au moins un récipient (2) afin de faire fondre progressivement la partie de fond (4) de celui-ci et de comprimer cette dernière le long d'une direction presque transversale à l'axe longitudinal du récipient (2).

2. Dispositif selon la revendication 1, **caractérisé en ce qu'**il comprend en outre au moins une station de renversement (16) positionnée radialement autour du carrousel de travail (10), comprenant un moyen de renversement (80) et adaptée de manière à mouler plastiquement la partie de fond (4) fondue en comprimant cette dernière suivant une direction presque parallèle à l'axe longitudinal du récipient (2); ladite station de renversement (16) effectuant un mouvement oscillant dans une direction presque radiale par rapport au carrousel de travail (10), de manière à permettre au moyen de renversement (80) d'entrer en contact avec la partie de fond (4) dans une condition de renversement (G).

3. Dispositif selon la revendication 1, **caractérisé en ce que** le carrousel de travail (10) tourne en effectuant un mouvement rotatif intermittent autour d'un axe horizontal.

4. Dispositif selon la revendication 1, **caractérisé en ce que** le carrousel de travail (10) tourne en effectuant un mouvement rotatif intermittent autour d'un axe vertical.

5. Dispositif selon la revendication 1, **caractérisé en ce que** chaque ensemble de pinces (20) comprend:
- un support (23) fixé au carrousel de travail (10);
- des pinces intérieures (21) dont les mâchoires sont connectées à un couple d'arbres intérieurs (24) supportés par le support (23);
- des pinces externes (22) dont les mâchoires sont connectées à un couple d'arbres externes (25), coaxiaux aux arbres intérieurs (24), supportés par le support (23) et formés de manière à incorporer intérieurement lesdites pinces externes (21);
- un siège d'enveloppe (26) adapté pour loger au moins un récipient (2) et connecté d'une façon amovible au support (23);
- un moyen de support (27) reliant les extrémités libres du couple d'arbres intérieurs (24) et supportant d'une façon amovible le siège d'enveloppe (26);
- un moyen de centrage (28) connecté d'une façon amovible à une mâchoire des pinces intérieures (21) et adapté pour positionner correctement chaque récipient (2) à l'intérieur du siège d'enveloppe (26);
les pinces intérieures (21) étant entraînées par le couple d'arbres intérieurs (24) à partir d'une condition d'ouverture intérieure (A), dans laquelle chaque récipient (2) est inséré dans ou désengagé hors du siège d'enveloppe (26), jusqu'à la condition de fermeture (B), dans laquelle lesdites pinces intérieures (21) serrent le fond (3) de chaque récipient (2) ; les pinces externes (22) étant entraînées par le couple d'arbres externes (25) à partir d'une condition d'ouverture externe (C), dans laquelle les mâchoires des pinces externes (22) ne sont pas en contact avec le récipient (2), jusqu'à une condition de moulage (F), dans laquelle lesdites pinces externes (22) sont fermées sur les pinces intérieures (21), moulant ainsi plastiquement la partie de fond (4) de chaque récipient (2) ; les deux arbres intérieurs (24) étant mis en rotation par le premier moyen de mouvement (29) et les deux arbres externes (25) étant mis en rotation par le deuxième moyen de mouvement (30).

6. Dispositif selon la revendication 5, **caractérisé en ce que** l'extrémité libre de chaque mâchoire des pinces intérieures (21) est fixée d'une façon amovible sur une partie d'extrémité intérieure (31).

7. Dispositif selon la revendication 6, **caractérisé en ce que** l'extrémité libre de la partie d'extrémité intérieure (31) comporte une pluralité d'encoches (35) finissant avec au moins une saillie (37, 37a) adaptée pour loger le fond (3) du récipient (2) et pour mouler ledit fond dans la condition de fermeture (B).

8. Dispositif selon la revendication 6, **caractérisé en ce que** les extrémités libres des parties d'extrémité intérieures (31) des pinces intérieures (21) présentent des parois se faisant face (36) présentant une fente (39) dans la condition de fermeture (B).

9. Dispositif selon la revendication 5, **caractérisé en ce que** la partie d'extrémité externe (33) est fixée d'une façon amovible à l'extrémité libre de chaque mâchoire des pinces externes (22) à l'aide d'un moyen de connexion élastique (32).

10. Dispositif selon la revendication 9, **caractérisé en ce que** les parties d'extrémité externes (33) sont configurées pour mouler la partie de fond (4) de chaque récipient (2) en lui donnant la forme d'un plan pratiquement plat comportant une moulure d'extrémité configurée (7) présentant une section presque triangulaire ou rectangulaire avec une extension transversale ou une section allongée presque circulaire ou rectangulaire.

11. Dispositif selon la revendication 5, **caractérisé en ce que** les deux arbres intérieurs (24) des pinces intérieures (21) sont connectés d'une façon cinématique au moyen d'un premier moyen denté (91).

12. Dispositif selon la revendication 11, **caractérisé en ce que** le premier moyen de mouvement (29) comprend au moins un levier intérieur (93) fixé à au moins un arbre intérieur (24) des pinces intérieures (21) et supportant d'une façon rotative un premier moyen de suiveur de came (95) adapté pour suivre une came intérieure (97) du carrousel de travail (10).

13. Dispositif selon la revendication 5, **caractérisé en ce que** les deux arbres externes (25) des pinces externes (22) sont connectés d'une façon cinématique au moyen d'un deuxième moyen denté (92).

14. Dispositif selon la revendication 13, **caractérisé en ce que** le deuxième moyen de mouvement (30) comprend au moins un levier externe (94) fixé à au moins un arbre externe (25) des pinces externes (22) et supportant d'une façon rotative un deuxième moyen de suiveur de came (96) adapté pour suivre une came externe (98) du carrousel de travail (10).

15. Dispositif selon les revendications 1 ou 2, **caractérisé en ce que** chacun des ensembles de moyens de fusion (60) et du moyen de renversement (80) est entraîné par un ensemble oscillant (40) comprenant:
- une broche de support (41) comprenant une bride fixe (42) possédant un pivot fou (43) sur lequel une extrémité d'une tige de connexion folle (44) est articulée;
- un arbre (45) supporté d'une façon rotative à l'intérieur de la broche de support (41) et connectée à une extrémité d'une tige de connexion de moteur (46);
- un support oscillant (47) connecté à chaque extrémité restante des tiges de connexion, folle (44) et de moteur (46), et supportant à l'aide d'un moyen de réglage élastique (48) un moyen de liaison (49) auquel l'ensemble de moyens de fusion (60) ou le moyen de renversement (80) est fixé d'une façon amovible;
ledit arbre (45), tournant en effectuant un mouvement alterné, déplace, par l'intermédiaire de la tige de connexion de moteur (46), le support oscillant (47), passant d'une condition de désengagement, dans laquelle ledit support oscillant (47) se trouve au point le plus éloigné du récipient (2), à une condition d'engagement, dans laquelle il se trouve au point le plus proche.

16. Dispositif selon la revendication 15, **caractérisé en ce que** le moyen de réglage élastique (48) permet de régler la position axiale du moyen de liaison (49) par rapport au support oscillant (47), dans lequel ledit moyen de réglage (48) peut en outre coulisser, grâce à un élément élastique (50), en vue d'amortir le contact entre le récipient (2) et l'ensemble de moyens de fusion (60) ou le moyen de renversement (80).

17. Dispositif selon la revendication 1, **caractérisé en ce que** chaque ensemble de moyens de fusion (60) comprend:
- un élément de support (61) comprenant deux rouleaux connectés d'une façon rotative, à savoir un rouleau supérieur (64) et un rouleau inférieur (65);
- un moyen de chauffage (62) configuré de manière à entrer en contact avec au moins un récipient (2) sur la partie de fond concernée (4), dans la condition de chauffage (E), et connecté d'une façon amovible à l'élément de support (61) en interposant au moins un élément d'isolation (63);
- une bande non adhésive (66) positionnée sur le moyen de chauffage (62) et enroulée autour du rouleau supérieur (64) et du rouleau inférieur (65) à l'aide desquels ladite bande est étirée;
- un moyen d'espacement élastique (67) assemblé sur le moyen de chauffage (62) à ses extrémités;
la bande non adhésive (66) étant adaptée pour transférer la chaleur produite par le moyen de chauffage (62) à la partie de fond (4) du récipient (2); le moyen d'espacement élastique (67) étant adapté pour amortir le contact entre le moyen de chauffage (62) et les pinces intérieures (21) et pour maintenir en même temps un espace présentant des dimensions prédéterminées entre ces derniers.

18. Dispositif selon la revendication 17, **caractérisé en ce que** le rouleau supérieur (64) peut être entraîné manuellement et tourne librement dans une seule direction.

19. Dispositif selon la revendication 17, **caractérisé en ce que** le rouleau inférieur (65) comprend un dispositif d'arrêt élastique (68) servant à éviter la rotation libre dudit rouleau.

20. Dispositif selon la revendication 17, **caractérisé en ce que** la bande non adhésive (66) est constituée d'un matériau insensible aux températures élevées et aux agents chimiques et présente un coefficient de frottement très faible.

21. Dispositif selon la revendication 2, **caractérisé en ce que** le moyen de renversement (80) comprend un poinçon externe (81) pouvant être adapté dans l'ensemble de pinces (20) dans une condition de renversement (G) dans laquelle le poinçon externe (81) comprime la partie de fond fondue (4) du récipient (2).

22. Dispositif selon la revendication 2 et la revendication 15, **caractérisé en ce que** le moyen de renversement (80) comprend un poinçon de pince (82) fixé à chaque ensemble de pinces (20) et déplacé, dans une condition de renversement (G), par un moyen de percussion (83) couplé à l'ensemble oscillant correspondant (40).

23. Dispositif selon la revendication 1, **caractérisé en ce qu'**il est commandé par des moyens électroniques de calcul et de commande adaptés pour commander les relations de phase entre le carrousel de travail (10), la pluralité d'ensembles de pinces (20) et la pluralité de stations de chauffage (15).

24. Procédé pour fermer et sceller des récipients (2) constitués d'une matière plastique thermosoudable, présentant un fond (3) ouvert, utilisant le dispositif décrit dans les revendications 1 à 23, le procédé comprenant les étapes consistant à:
- insérer au moins un récipient (2) à l'intérieur d'un ensemble de pinces (20), connecté et supporté par un carrousel de travail (10) tournant en effectuant un mouvement intermittent;
- bloquer le récipient (2) à l'aide de l'ensemble de pinces (20) fermant ledit récipient (2) dans le fond (3), formant une partie de fond (4);
- chauffer la partie de fond (4) jusqu'à la fusion de celle-ci à l'aide d'ensembles de moyens de fusion (60);
- comprimer ladite partie de fond fondue (4) dans une direction presque parallèle à l'axe longitudinal du récipient (2);
- libérer le récipient (2) et le retirer du carrousel de travail (10).

25. Procédé selon la revendication 24, **caractérisé en ce que** la compression de la partie de fond fondue (4) du récipient (2) est réalisée par les mêmes ensembles de moyens de fusion (60) fournissant la chaleur audit récipient.

26. Procédé selon la revendication 24, **caractérisé en ce qu'**il réalise en outre, après la compression le long d'une direction longitudinale, une compression transversale de la partie de fond fondue (4) exécutée par les pinces externes (22) de chaque ensemble de pinces (20) le long d'une direction transversale à l'axe longitudinal du récipient (2) dans une condition de moulage (F).

27. Procédé selon la revendication 26, **caractérisé en ce qu'**il comprend en outre, après la compression transversale, une compression de renversement exécutée par le moyen de renversement (80) dans une direction presque parallèle à l'axe longitudinal du récipient (2) dans une condition de renversement (G).

28. Procédé selon la revendication 24, **caractérisé en ce qu'**il comprend le remplacement progressif de la partie de bande non adhésive (66) en contact avec le récipient (2) par l'enroulement de ladite bande autour du rouleau supérieur (64) et le déroulement de ladite bande du rouleau inférieur (65).

29. Procédé selon la revendication 24, **caractérisé en ce que** l'insertion d'au moins un récipient (2) à l'intérieur d'un ensemble de pinces (20) est exécutée après le remplissage du récipient.

30. Procédé selon la revendication 24, **caractérisé en ce qu'**il assure en outre le remplissage d'au moins un récipient (2) après l'insertion du récipient vide (2) à l'intérieur d'un ensemble de pinces (20).
